# EUROPÄISCHE PATENTSCHRIFT

(11) **EP 2 956 523 B1**
(45) Veröffentlichungstag und Bekanntmachung des Hinweises auf die Patenterteilung: **26.12.2018**
(21) Anmeldenummer: 14704333.5
(22) Anmeldetag: 12.02.2014
(51) Int. Cl.: C09K 21/04, C09K 21/12, C08K 5/00, C08L 77/00

(54) **FLAMMSCHUTZMITTELZUSAMMENSETZUNG**
FLAME RETARDANT COMPOSITION
COMPOSITION DE PRODUIT IGNIFUGE

(30) Priorität: 13.02.2013 DE 102013202351; 11.06.2013 DE 102013210902
(43) Veröffentlichungstag der Anmeldung: 23.12.2015
(73) Patentinhaber: J.M. Huber Corporation, Atlanta, GA 30339 (US)
(72) Erfinder: LEISTNER, Marcus, 64846 Groß-Zimmern (DE); PFAENDNER, Rudolf, 64668 Rimbach (DE); DAVE, Trupti, 64673 Zwingenberg (DE); KÖSTLER, Hans-Günter, 64646 Heppenheim (DE); WEHNER, Wolfgang, 64673 Zwingenberg (DE); BOURGEOIS, Yann, B-7181 Petit-Roeulx-lez-Nivelles (BE)
(74) Vertreter: Wibbelmann, Jobst
(86) Internationale Anmeldenummer: PCT/EP2014/052758
(87) Internationale Veröffentlichungsnummer: WO 2014/124990

(56) Entgegenhaltungen:
- EP-A1- 1 657 972
- WO-A1-2010/057851
- WO-A1-2014/060003
- DE-A1-102010 035 103

## Beschreibung

Die Erfindung betrifft Flammschutzmittel für Kunststoffe wie beispielsweise synthetische Polymere und Kunststoffzusammensetzungen sowie entsprechende Herstellungsverfahren und Verwendungen.

### Hintergrund der Erfindung

Die meisten Kunststoffe sind brennbar und vergleichsweise leicht entflammbar. Um das Brandrisiko von Kunststoffen in bestimmten Anwendungen zu vermindern oder auszuschließen ist es deshalb erforderlich die Entflammbarkeit zu verringern und/oder flammfeste Kunststoffzusammensetzungen einzusetzen. Dazu werden in der Regel Flammschutzmittel dem Kunststoff beigegeben mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (häufig in Kombination mit Antimontrioxid), von phosphorhaltigen und stickstoffhaltigen Verbindungen und von anorganischen Hydroxiden. In neuerer Zeit werden aus Umweltgründen halogenfreie Flammschutzlösungen bevorzugt.

Die EP 1 657 972 B1 betrifft Phosphinat-Komplexverbindungen der 2., 3., 12. und 13. Gruppen und deren Verwendung als Flammschutzmittel. Insbesondere werden Phosphinatkomplexe der Formel 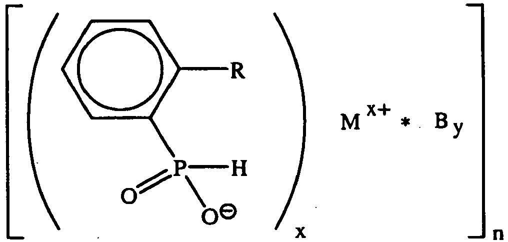
beschrieben, worin M eines der Metalle der zweiten, dritten, zwölften oder dreizehnten Gruppe des periodischen Systems der Elemente;
x die Zahl 2 oder 3;
R ein Wasserstoffatom oder ein 2 Hydroxyphenylrest;
B eine Lewis-Base;
y die Zahl 1 oder 2; und
n eine ganze Zahl von 1 bis 100
bedeutet.

Die EP 2 183 314 B1 betrifft Phosphorhaltige Triazinverbindungen als Flammschutzmittel. Insbesondere werden Verbindungen der Formel [(A-H)⁺]ₘ [M^{m+}(HPO₄²⁻)ₘ] und der Formel [(A-H)⁺]ₘ[M^{m+}(P₂O₇⁴⁻)_{m/2}] offenbart, wobei (A-H)⁺ ein Rest der Formel 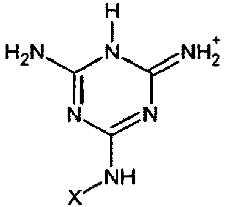 ist und wobei X H, CN, C(NH)NH₂, C(O)NH₂, C(NH)NHCN ist oder dessen Kondensationsprodukt, wobei M unabhängig voneinander Ca, Mg, Zn oder AI ist und wobei m 2 oder 3 ist.

Aus der WO 2012/025362 ist eine Flammschutzmittelzusammensetzung bekannt, welche mindestens ein Triazin-interkaliertes Metall-Phosphat der Formel

(A⁻H)ₐ⁽⁺⁾[M_{b}^{m+}(H₂PO₄)ₓ₁⁽⁻⁾(HPO₄)ₓ₂²⁽⁻⁾(PO₄)ₓ₃³⁽⁻⁾(PO₃)_{y}⁽⁻⁾]^{(a-)} · pH₂O

und mindestens eine weitere Flammschutzmittelkomponente aufweist. Hierbei ist jedes M unabhängig Cu, Mg, Ca, Zn, Mn, Fe, Co, Ni, TiO, ZrO, VO, B, Si, AI, Sb, La, Ti, Zr, Ce oder Sn. Die weitere Flammschutzmittelkomponente kann ein Metall-Phosphinat der Formel 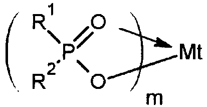 sein, wobei R¹ und R² Wasserstoff oder ein geradkettiger oder ein verzweigter C₁-C₆-Alkylrest oder ein Phenylrest ist und Mt = Ca, Mg, Zn oder AI und m = 2 oder 3 ist.

Aus der WO 2014/060003 A1 sind Azin-Metallphosphate als flammhemmende Mittel bekannt.

### Zusammenfassung der Erfindung

Obwohl verschiedene Flammschutzmittel wie die oben angegebenen Beispiele bekannt sind, besteht nach wie vor ein Bedarf an mit den jeweiligen Kunststoffen gut verarbeitbaren Flammschutzmitteln, die in vergleichsweise niedrigen Konzentrationen wirksam sind und darüber hinaus kosteneffizient sind.

Diesem Bedürfnis wird durch die Gegenstände der unabhängigen Patentansprüche Rechnung getragen. Vorteilhafte Ausführungsformen der vorliegenden Erfindung sind in den abhängigen Ansprüchen beschrieben.

Gemäß einer Ausführungsform eines ersten Aspekts der hierin offenbarten Gegenstände wird eine Flammschutzmittelzusammensetzung bereitgestellt, enthaltend eine der folgenden Melamin-Verbindungen:
Melamin(aluminiumphosphat)(Mel-H)₂⁽⁺⁾[AlP₃O₁₀]²⁻:
Melamin(zinkphosphat)[(Mel-H)⁺]₂[ZnP₂O₇]²⁻;
Melamin(magnesiumphosphat)(Mel-H)ₓ⁺[Mg²⁺]₂[PO₃⁻]₍ₓ₊₁₎[PO₄³⁻], wobei x zwischen 1 und 4 liegt, insbesondere (Mel-H)₂⁽⁺⁾[Mg₂P₄O₁₃]²⁽⁻⁾;
oder deren Oligomere oder Polymere; und
ein Derivat von 9,10-dihydro-9-oxa-10-phosphorylphenanthren-10-oxid oder polymere Komplexe dieses Derivates, gemäß mindestens einer der Formeln IIa, IIb, IIc und IId: 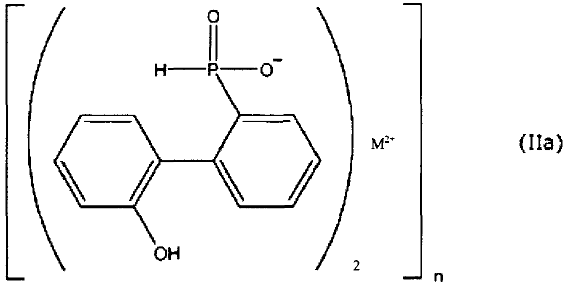 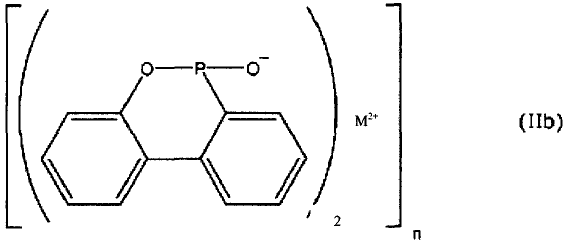 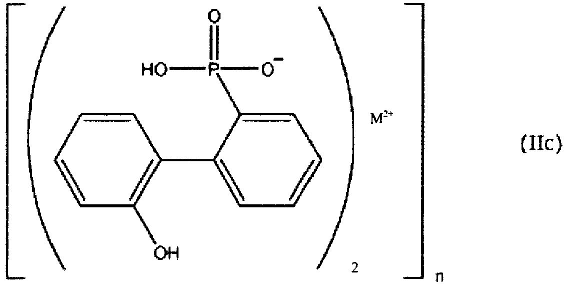 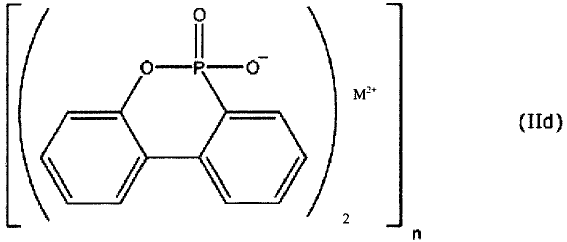
wobei M = Zn und n ≥ 1 ist.

Das Derivat von 9,10-dihydro-9-oxa-10-phosphorylphenanthren-10-oxid (nachfolgend kurz als "Derivat" bezeichnet) oder die polymeren Komplexe des Derivats können in oxidierter Form (Formel IIb, IId) und/oder hydratisierter Form (Formel IIa, IIc) vorliegen. Die oxidierte Form steht hierbei mit der korrespondierenden hydratisierten Form im Gleichgewicht. Insbesondere steht Formel IIa mit Formel IIb im Gleichgewicht und Formel IIc steht mit Formel IId im Gleichgewicht. Abhängig von den vorliegenden Bedingungen und der Vorgeschichte (z.B. den Herstellungsbedingungen) kann das Gleichgewicht zu der oxidierten Form oder zu der hydratisierten Form hin verschoben sein, wobei im Extremfall ausschließlich die oxidierte Form oder ausschließlich die hydratisierte Form in der Flammschutzmittelzusammensetzung enthalten sein kann.

Gemäß einer Ausführungsform ist das in der Flammschutzmittelzusammensetzung enthaltene Derivat (oder die polymeren Komplexe des Derivats) ausschließlich ein Derivat oder polymerer Komplex des Derivats gemäß Formel IIa/IIb. Gemäß einer anderen Ausführungsform ist das in der Flammschutzmittelzusammensetzung enthaltene Derivat (oder die polymeren Komplexe des Derivats) ausschließlich ein Derivat oder polymerer Komplex des Derivats gemäß Formel IIc/IId. Gemäß einer nochmals anderen Ausführungsform ist das in der Flammschutzmittelzusammensetzung enthaltene Derivat von 9,10-dihydro-9-oxa-10-phosphorylphenanthren-10-oxid (oder die polymeren Komplexe des Derivats) sowohl aus einem Derivat oder polymeren Komplex des Derivats gemäß Formel IIa/IIb als auch aus einem Derivat oder polymeren Komplex des Derivats gemäß Formel IIc/IId gebildet. Die Abkürzung "gemäß Formel IIx/IIy" (wobei x und y aus a, b, c, und d ausgewählt sind) bedeutet hier, "gemäß Formel IIx und/oder Formel IIy", insbesondere "mit einer Derivatkomponente gemäß Formel IIx und/oder einer Derivatkomponente gemäß Formel IIy". Beispielsweise ist ein Derivat oder polymerer Komplex gemäß Formel IIa/IIb ein Derivat von 9,10-dihydro-9-oxa-10-phosphorylphenanthren-10-oxid mit einer Derivatkomponente gemäß Formel IIa und/oder einer Derivatkomponente gemäß Formel IIb.

Gemäß einer Ausführungsform enthält das in der Flammschutzmittelzusammensetzung enthaltene Derivat (oder die polymeren Komplexe des Derivats) ein Derivat oder einen polymeren Komplex des Derivats gemäß Formel IIa/IIb. Gemäß einer Ausführungsform enthält das in der Flammschutzmittelzusammensetzung enthaltene Derivat (oder die polymeren Komplexe des Derivats) ein Derivat oder einen polymeren Komplex des Derivats gemäß Formel IIc/IId.

Der erste Aspekt der hierin offenbarten Gegenstände basiert auf der Erkenntnis der Erfinder, dass die erfindungsgemäße Melamin-Verbindung in Kombination mit dem Derivat von 9,10-dihydro-9-oxa-10-phosphorylphenanthren-10-oxid oder dessen polymerer Komplexe eine synergistische Wirkung erzielt wird und die Wirksamkeit der Flammschutzmittelzusammensetzung höher ist als erwartet.

Weiterhin ist bekannt, dass Flammschutzmittel auf der Basis von Phosphorverbindungen häufig Korrosion an (üblichen) Verarbeitungsmaschinen wie z.B. Extrudern oder Spritzgießmaschinen verursachen. Ausführungsformen der hierin offenbarten Gegenstände zeichnen sich dagegen durch eine Korrosionsarmut an Verarbeitungsmaschinen aus. Mit anderen Worten sind bei Ausführungsformen der hierin offenbarten Gegenstände keine oder nur geringe Mengen an Additiven erforderlich, um eine Korrosion an Verarbeitungsmaschinen zu vermeiden.

Um Kosten zu senken, besteht zwar allgemein ein Bestreben, die Anzahl an unterschiedlichen Flammschutzmitteln so gering wie möglich zu halten, beispielsweise um Lagerhaltungskosten zu senken. Allerdings steht diesem Nachteil die synergistische Wirkung der beanspruchten Kombination von Flammschutzmitteln gegenüber, so dass der Einsatz der beanspruchten Flammschutzmittelzusammensetzung insgesamt vorteilhaft sein kann.

Weiterhin erlaubt eine synergistische Flammschutzmittelzusammensetzung niedrige Einsatzkonzentrationen der Flammschutzmittelzusammensetzung, was die Einarbeitung in den Kunststoff erleichtert und im Vergleich zu höheren Konzentrationen zu vorteilhaften Eigenschaften, wie z.B. mechanischen Kennwerten in der Anwendung führen kann.

Gemäß einer Ausführungsform enthält die Flammschutzmittelzusammensetzung Melamin(aluminiumphosphat) (Mel-H)₂⁽⁺⁾[AlP₃O₁₀]²⁽⁻⁾. Dieses Flammschutzmittel kann beispielsweise gemäß DE102007036465A1 hergestellt werden.

Gemäß einer weiteren Ausführungsform enthält die Flammschutzmittelzusammensetzung Melamin(zinkphosphat)[(Mel-H)⁺]₂ [ZnP₂O₇]²⁻.

Gemäß einer Ausführungsform ist das Derivat von 9,10-dihydro-9-oxa-10-phosphorylphenanthren-10-oxid, welches auch unter dem Kürzel "DOPO" bekannt ist, Bis(2'-Hydroxybiphenyl-2-phosphinato)-zink gemäß Formel VII (Zn-DOPO).

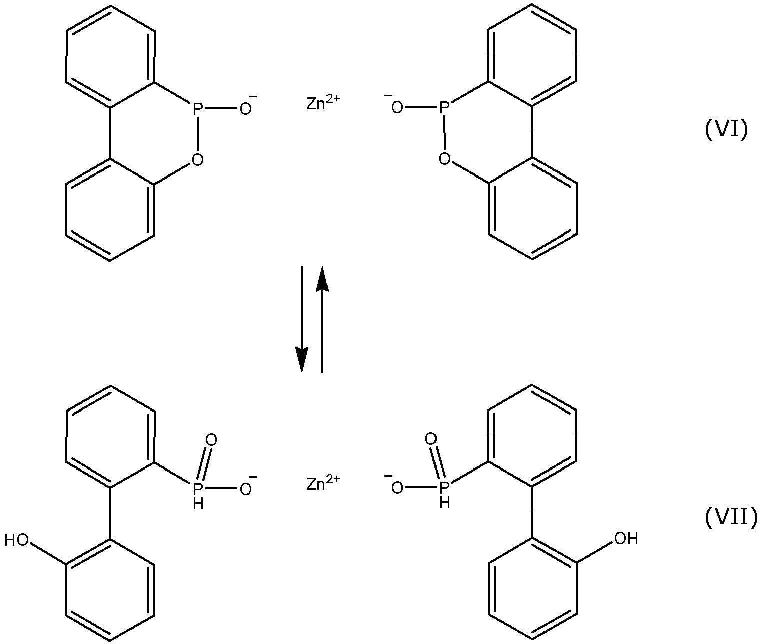

Das Zn-DOPO der Formel VII steht hierbei mit der Verbindung gemäß Formel VI im Gleichgewicht und geht unter Wasserabspaltung in diese Verbindung über. Ersichtlich basiert das Zn-DOPO der Formel VI auf Formel IIb und das Zn-DOPO der Formel VII basiert auf der Formel IIa. Analog ist gemäß einer anderen Ausführungsform das Derivat von 9,10-dihydro-9-oxa-10-phosphorylphenanthren-10-oxid oder dessen polymere Komplexe ein Zn-DOPO, welches auf Formel IIc und Formel IId basiert. Gemäß einer weiteren Ausführungsform ist das Derivat von 9,10-dihydro-9-oxa-10-phosphorylphenanthren-10-oxid oder dessen polymere Komplexe ein Zn-DOPO, welches auf den Formeln IIa, IIb, IIc und IId basiert, wobei wie oben erläutert jeweils die oxidierte Form mit der hydratisierten Form im Gleichgewicht steht.

Gemäß einer weiteren Ausführungsform enthält die Flammschutzmittelzusammensetzung mindestens ein weiteres Flammschutzmittel, welches verschieden ist von der erfindungsgemäßen Melamin-Verbindung und welches verschieden ist von dem Derivat von 9,10-dihydro-9-oxa-10-phosphorylphenanthren-10-oxid oder dessen polymerem Komplex. Gemäß einer Ausführungsform ist mindestens eines von dem mindestens einen weiteren Flammschutzmittel ein anorganisches Flammschutzmittel, ein stickstoffhaltiges Flammschutzmittel, ein phosphorhaltiges Flammschutzmittel, eine Chlor- und/oder Brom-haltige Verbindung, ein Borat, oder ein Antidrip-Mittel.

Anorganische Flammschutzmittel können beispielsweise Al(OH)₃, Mg(OH)₂, AIO(OH), Zinkstannat, Zinkhydroxystannat, Hydrotalcit, Schichtsilikate wie z.B. Montmorillonit, nicht modifiziert oder organisch modifiziert, Doppelsalze, wie z.B. Mg-Al-Silikate oder POSS-(Polyedrische Oligomere Silsesquioxane) Verbindungen, sein oder solche Verbindungen enthalten.

Stickstoffhaltige Flammschutzmittel können beispielsweise Melamin, Melem, Melam, Melon, Melaminderivate, Melaminkondensationsprodukte oder Melaminsalze, Benzoguanamin, Polyisocyanurate, Allantoin, Phosphacene insbesondere Melamincyanurat, Melaminphosphat, Melaminpyrophosphat, Dimelaminphosphat, Melaminpolyphosphat, Ammoniumpolyphosphat, Melaminborat, Melaminhydrobromid, Ethylendiaminorthophosphat, Piperazinpolyphosphat, Piperazinpyrophosphat, Piperazinorthophosphat sein oder solche Verbindungen enthalten.

Phosphorhaltige Flammschutzmittel können beispielsweise roter Phosphor, Phosphate wie z.B. Resorcindiphosphat, Bisphenol-A-diphosphat und ihre Oligomere, Triphenylphosphat, Phosphinate wie z.B. Salze der hypophosphorigen Säure und Ihrer Derivate wie Diethylaluminiumphosphinat, Diethylzinkphosphinat oder Aluminiumphosphinat, Phosphonatester, oligomere und polymere Derivate der Methanphosphonsäure, 9,10-dihydro-9-oxa-10-phosphorylphenanthren-10-oxid (DOPO) und substituierte Verbindungen sein oder solche Verbindungen enthalten.

Ein Flammschutzmittel in Form einer eine Chlor- und/oder Brom-haltige Verbindung ist oder enthält z.B. eine oder mehrere der folgenden Verbindungen: polybrominierte Diphenyloxide, Tris(3-bromo-2,2-bis(bromomethyl)propyl-phosphat, Ethylen-bis(tetrabromophthalimid), Tetrabromo-bisphenol A, bromiertes Polystyrol, bromiertes Polybutadien oder Blockcopolymere bestehend aus Polystyrol und bromiertem Polybutadien.

Ein Flammschutzmittel in Form eines Borats ist oder enthält z.B. Zinkborat oder Calciumborat.

Ein Flammschutzmittel in Form eines Antidrip-Mittels ist oder enthält z.B. Polytetrafluorethylen.

Gemäß einer Ausführungsform eines zweiten Aspektes der hierin offenbarten Gegenstände wird eine Kunststoffzusammensetzung bereitgestellt, welche einen Kunststoff und eine Flammschutzmittelzusammensetzung gemäß einer oder mehreren der hierin offenbarten Ausführungsformen enthält, insbesondere gemäß einer oder mehreren Ausführungsformen des ersten Aspektes, wobei der Kunststoff ein thermoplastischer Kunststoff, ein elastomerer Kunststoff oder ein duroplastischer Kunststoff ist.

Beispielsweise enthält die Kunststoffzusammensetzung gemäß einer Ausführungsform eine Kunststoffkomponente, die mindestens einen Kunststoff aufweist, wobei von dem mindestens einen Kunststoff mindestens ein Kunststoff ein thermoplastischer Kunststoff, ein elastomerer Kunststoff oder ein duroplastischer Kunststoff ist. Gemäß einer Ausführungsform ist jeder Kunststoff der Kunststoffzusammensetzung ein thermoplastischer Kunststoff, ein elastomerer Kunststoff oder ein duroplastischer Kunststoff. Gemäß einer Ausführungsform enthält die Kunststoffzusammensetzung die Kunststoffkomponente und die Flammschutzmittelzusammensetzung und, optional, eine weitere Komponente, beispielsweise einer hierin offenbarten weiteren Komponenten. Gemäß einer Ausführungsform besteht die Kunststoffzusammensetzung aus der Kunststoffkomponente und der Flammschutzmittelzusammensetzung und, optional, einer hierin offenbarten weiteren Komponente.

Gemäß einer Ausführungsform ist der Kunststoff ein Stoff, der Makromoleküle mit organischen Gruppen enthält, beispielsweise ein synthetisches Polymer. Geeignete Polymere sind ins besondere:
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-1, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester.
b) Polystyrol, Polymethylstyrol, Styrol-Butadien, Styrol-Butadien-Styrol (SBS), Styrol-isopren, styrol-butadien-acrylnitril (ABS), styrolacrylnitril-acrylat (ASA) Styrol-Maleinsäureanhydrid-Polymere einschl. entsprechender Pfropfcopolymere wie z.B. Styrol auf Butadien oder Maleinsäureanhydrid auf SBS.
c) Halogenenthaltende Polymere wie z.B. Polyvinylchlorid und Polyvinylidenchlorid.
d) Polymere von ungesättigten Estern wie z.B. Polyacrylate und Polymethacrylate wie PMMA, Polyacrylnitril.
e) Polymere aus ungesättigten Alkoholen und Derivaten, wie z.B. Polyvinylalkohol, Polyvinylacetat, Polyvinylbutyral.
f) Polyacetale, wie z.B. Polyoxymethylen.
g) Polyphenylenoxide und Blends mit Polystyrol.
h) Polyurethane, insbes. lineare Polyurethane.
i) Polyamide wie z.B. Polyamid-6, 6.6., 6.10. 4.6, 6.12, 12.12., Polyamid 11, Polyamid 12 sowie (teil-)aromatische Polyamide wie z.B. Polyphthalamide.
j) Polyimide, Polyamidimide, Polyetherimide, Polyketone, Polysulfone, Polyethersulfone, Polyphenylensulfid.
k) Polyester wie z.B. Polyethylenterephthalat und Polybutylenterephthalat, Polymilchsäure.
l) Polycarbonat.
m) Cellulosederivate wie z.B. Cellulosenitrat, Celluloseacetat, Cellulosepropionat.
n) sowie Mischungen, Kombinationen oder Blends aus zwei oder mehr der zuvor genannten Polymeren.

Gemäß einer Ausführungsform enthält der Kunststoff oder besteht der Kunststoff aus mindestens einer der folgenden Verbindungen: Polyamid, Copolyamid, beispielsweise hergestellt aus Diaminen und Dicarbonsäuren und/oder aus Aminocarbonsäuren oder den entsprechenden Lactamen wie z.B. Polyamid-4, Polyamid-6, Polyamid-6.6, Polyamid-6.10, Polyamid 6.9, Polyamid 6.12, Polyamid 4.6, Polyamid-4.10, Polyamid 12.12, Polyamid-11, Polyamid-12, (teil)aromatisches Polyamid insbesondere hergestellt aus Hexamethylendiamin und Isophthalsäure und/oder Terephthalsäure, Polyamid oder Copolyamid-Blends mit ABS.

Gemäß einer bevorzugten Ausführungsform enthält die Kunststoffzusammensetzung Polyamid-6.6, Polyamid-6.10, Polyamid-4.6, und/oder (teil)aromatische Polyamide, wobei Polyamid-6.6 und (teil)aromatische Polyamide ganz besonders bevorzugt sind. Es versteht sich, dass der Begriff "(teil)aromatische Polyamide" sowohl aromatische Polyamide als auch teilaromatische Polyamide umfasst.

Gemäß einer Ausführungsform enthält die Kunststoffzusammensetzung ferner einen Verstärkungsstoff und/oder einen Füllstoff, beispielsweise Glasfasern.

Gemäß einer weiteren Ausführungform enthält die Kunststoffzusammensetzung ferner einen oder mehrere Säurefänger, einen oder mehrere Stabilistoren und/oder ein oder mehrere Dispergiermittel.

Gemäß einer Ausführungsform enthält die Kunststoffzusammensetzung (oder besteht die Kunststoffzusammensetzung aus) eine Basiskomponente bestehend aus:
(A) 40-95 Gew. % von mindestens einem Kunststoff, beispielsweise Polyamid
(B) 1-30 Gew. % phosphorhaltige Triazinverbindungen gemäß Formel I, beispielsweise gemäß Formel IV oder Formel V
(C) 1-30 Gew. % des Derivats von 9,10-dihydro-9-oxa-10-phosphorylphenanthren-10-oxid oder dessen polymerem Komplex
(D) 0-20 Gew. % weiteres Flammschutzmittel (ein oder mehrere Flammschutzmittel, die von (B) und (C) verschieden sind)
(E) 0-40 Gew. % Verstärkungsstoff und/oder Füllstoff
so dass die Bestandteile (A) bis (E) insgesamt 100 Gew. % ergeben.

Eine bevorzugte Ausführungsform umfasst
(A) 40-95 Gew. % von mindestens einem Kunststoff, beispielsweise Polyamid
(B) 2-20 Gew. % phosphorhaltige Triazinverbindungen gemäß Formel I, beispielsweise gemäß Formel IV oder Formel V
(C) 2-20 Gew. % des Derivats von 9,10-dihydro-9-oxa-10-phosphorylphenanthren-10-oxid oder dessen polymerem Komplex
(D) 0-20 Gew. % weiteres Flammschutzmittel (ein oder mehrere Flammschutzmittel, die von (B) und (C) verschieden sind)
(E) 0-40 Gew. % Verstärkungsstoff und/oder Füllstoff
so dass die Bestandteile (A) bis (E) insgesamt 100 Gew. % ergeben.

Soweit nichts anderes angegeben ist, sind die hierin angegebenen Prozentangaben Gewichts-Prozent (Gew. %).

Gemäß einer Ausführungsform liegt das Gewichtssverhältnis zwischen der Verbindung der Formel I und dem Derivat von 9,10-dihydro-9-oxa-10-phosphorylphenanthren-10-oxid oder dessen polymerem Komplex zwischen 1:30 und 30:1, oder, gemäß anderer Ausführungsform zwischen 1:10 und 10:1, wie dies beispielsweise auch bei den vorstehend angegebenen Ausführungsformen von Kunststoffzusammensetzungen der Fall ist.

Verstärkungs- und/oder Füllstoff umfasst mindestens einen Füllstoff wie z.B. Calciumcarbonat, Talkum, Wollastonit, Dolomit, und/oder mindestens einen Verstärkungsstoff wie z.B. Glasfasern und/oder Kohlefasern. Bevorzugt sind Glasfasern.

Gemäß einer Ausführungsform sind die 40-95 Gew. % von mindestens einem Kunststoff beispielsweise 40-95 Gew. % einer Kunststoffkomponente wie oben beschrieben.

Beispielsweise besteht die Kunststoffzusammensetzung ausschließlich aus der Basiskomponente. Gemäß einer weiteren Ausführungsform enthält die Kunststoffzusammensetzung neben der Basiskomponente mindestens eine weitere Komponente, beispielsweise einen oder mehrere der nachfolgend genannten Zusatzstoffe.

Gemäß einer weiteren Ausführungsform kann die Kunststoffzusammensetzung neben der Basiskomponente weitere Zusatzstoffe enthalten, beispielsweise aus der Gruppe der UV-Absorber, der Lichtstabilisatoren, der Stabilisatoren, der Hydroxylamine, der Benzofuranone, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Kompatibilisatoren, Dispergiermittel, Sauerstofffänger, Säurefänger, Markierungsmittel oder Antifoggingmittel. In bevorzugter Ausführungsform enthält die Kunststoffzusammensetzung neben der Basiskomponente insbesondere Säurefänger, z.B. auf Basis von Salzen langkettiger Säuren wie z.B. Calciumstearat oder Zinkstearat oder von Hydrotalciten und/oder Stabilisatoren aus der Gruppe der phenolischen Antioxidantien und der Phosphite bzw. als Polyamid-Stabilisatoren Metalle wie Cu oder Fe und ihre halogenhaltigen Salze.

In einer bevorzugten Ausführungsform enthält die Kunststoffzusammensetzung zusätzlich ein Dispergiermittel auf polymerer Basis. Ein geeignetes polymeres Dispergiermittel besteht aus einer polymeren Kette und aus Ankergruppen. Die polymere Kette stellt die Verträglichkeit mit dem flammzuschützenden Kunststoff her, die Ankergruppen weisen eine Wechselwirkung mit dem Flammschutzmittel auf. Geeignete polymere Dispergiermittel sind beispielsweise Styrol-Maleinsäureanhydrid-Copolymere, aliphatische Polyether mit Carboxylendgruppen und (Meth)acrylat-Copolymere mit (Meth)acrylsäure-gruppen oder Methacrylat-Ionomeren.

Die bevorzugten weiteren Additive aus der Klasse der Säurefänger, der Stabilisatoren und der Dispergiermittel werden vorzugsweise in Konzentrationen zwischen 0.05 Gew. % und 3 Gew.% bezogen auf das Gewicht der Kunststoffzusammensetzung zugegeben.

Es versteht sich, dass sich in der gemäß (A) bis (E) definierten Basiskomponente der Kunststoffzusammensetzung bei Zugabe weiterer Zusatzstoffe das Verhältnis der Komponenten (A) bis (E) untereinander nicht ändert.

Gemäß einem dritten Aspekt der hierin offenbarten Gegenstände wird eine Verwendung einer Flammschutzmittelzusammensetzung gemäß einer oder mehreren der hierin offenbarten Ausführungsformen als Flammschutzmittel für einen Kunststoff geliefert.

Gemäß einem vierten Aspekt der hierein offenbarten Gegenstände wird ein Verfahren bereitgestellt zum Herstellen einer Kunststoffzusammensetzung, welche mindestens einen Kunststoff und eine Flammschutzmittelzusammensetzung gemäß einer oder mehreren der hierin offenbarten Ausführungsformen aufweist, das Verfahren enthaltend: Mischen der Verbindung gemäß Anspruch 1, mit dem mindestens einen Kunststoff; Mischen des Derivats von 9,10-dihydro-9-oxa-10-phosphorylphenanthren-10-oxid oder dessen polymerer Komplexe mit dem mindestens einen Kunststoff. Die Mischung kann ebenfalls in kompaktierter oder granulierter Form vorliegen, um ein staubfreies Arbeiten bei der Verarbeitung zu ermöglichen.

Gemäß einer Ausführungsform enthält das Verfahren ferner: (i) Bereitstellen der Flammschutzmittelzusammensetzung nach Anspruch 1; (ii) danach Mischen der Flammschutzmittelzusammensetzung mit dem mindestens einen Kunststoff. Auf diese Weise kann die Flammschutzmittelzusammensetzung gemäß Ausführungsformen der hierin offenbarten Gegenstände separat von dem mindestens einen Kunststoff hergestellt und vertrieben werden. Durch Mischen der Flammschutzmittelzusammensetzung mit dem mindestens einen Kunststoff wird dann eine Kunststoffzusammensetzung gemäß Ausführungsformen der hierein offenbarten Gegenstände gebildet.

Gemäß einer Ausführungsform wird die Melamin-Verbindung gemäß Anspruch 1, und das Derivat von 9,10-dihydro-9-oxa-10-phosphorylphenanthren-10-oxid oder dessen polymere Komplexe dem mindestens einen Kunststoff getrennt zugeführt. Auf diese Weise wird erst in der mit diesem Verfahren hergestellten Kunststoffzusammensetzung die erfindungsgemäße Flammschutzmittelzusammensetzung realisiert.

Gemäß einer Ausführungsform umfasst das Verfahren (gemäß einer oder mehreren der hierin offenbarten Ausführungsformen) ferner ein Homogenisieren der Kunststoffzusammensetzung, beispielsweise ein Homogenisieren in der Kunststoffschmelze.

Beispielsweise kann die Einarbeitung der Flammschutzmittel in den (mindestens einen) Kunststoff durch dem Fachmann bekannte Verfahren der Kunststoffverarbeitung erfolgen, wobei der Kunststoff in Anwesenheit der Flammschutzmittel und ggf. der weiteren Additive und Zusätze aufgeschmolzen wird und die Kunststoffzusammensetzung homogenisiert wird. Der Aufschmelzprozess erfolgt zweckmäßigerweise oberhalb der Glasüberganstemperatur, vorzugsweise mindestens 50 °C oberhalb der Glasübergangstemperatur bei amorphen Polymeren oder oberhalb der Schmelztemperatur, vorzugsweise mindestens 20 °C oberhalb der Schmelztemperatur bei (teil-)kristallinen Kunststoffen. Vorzugsweise erfolgt dies durch Extrusion, z.B. auf einem Doppelschneckenextruder.

Im Folgenden werden exemplarische Ausführungsformen der hierin offenbarten Gegenstände beschrieben, wobei beispielsweise auf ein Verfahren zum Herstellen einer Kunststoffzusammensetzung und auf eine Flammschutzmittelzusammensetzung Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Flammschutzmittelzusammensetzung beschrieben werden. Wiederum andere Ausführungsformen werden mit Bezug auf eine Kunststoffzusammensetzung beschrieben. Jedoch wird der Fachmann der vorstehenden und der nachfolgenden Beschreibung und den Ansprüchen entnehmen, dass, solange es nicht anders angegeben ist, Merkmale verschiedener Aspekte, Ausführungsformen und Beispiele beliebig kombinierbar sind. Beispielsweise ist selbst ein Merkmal, welches sich auf ein Verfahren bezieht, mit einem Merkmal kombinierbar, welches sich auf eine Flammschutzmittelzusammensetzung oder eine Kunststoffzusammensetzung bezieht. An Stelle eines einzigen Kunststoffs können gemäß einer Ausführungsform auch zwei oder mehr Kunststoffe verwendet werden.

Weitere Vorteile und Merkmale der vorliegenden Erfindung ergeben sich aus der folgenden beispielhaften Beschreibung derzeit bevorzugter Ausführungsformen, auf welche die Erfindung jedoch nicht beschränkt ist.

### Ausführungsbeispiele:

Die in der unten stehenden Tabelle enthaltenen erfindungsgemäßen Beispiele und Vergleichsbeispiele wurden gemäß der angegebenen Zusammensetzung mit 25 Gew. % Glasfasern als Verstärkungsmittel und jeweils mit dem Zusatz von 0.2 Gew. % Irganox 1098 (phenolisches Antioxidans, Hersteller BASF SE) und 0.2 Gew. % Irgafos 168 (Phosphit, Hersteller BASF SE) zur Stabilisierung und 0.2 Gew. % Calciumstearat als Säurefänger/Gleitmittel verarbeitet.

Bei den beispielhaft verwendeten Flammschutzmitteln FSM-1, FSM-2 und FSM-3 (obige Gruppe (B), d.h. die beispielhaft verwendete phosphorhaltige Triazinverbindung gemäß Formel I) handelt es sich um Verbindungen, die gemäß den Vorschriften von DE102007036465A1 synthetisiert wurden. Das DOPO-Zn (obige Gruppe (C), d.h. das beispielhaft verwendete Derivat von 9,10-dihydro-9-oxa-10-phosphorylphenanthren-10-oxid oder dessen polymerer Komplex) wurde gemäß EP 1657972 hergestellt. Bei den Flammschutzmitteln handelt es sich um folgende Verbindungen:
- FSM-1:: Melaminpoly(aluminiumphosphat) z.B. (Mel-H)₂⁽⁺⁾[AlP₃O₁₀]²⁽⁻⁾
- FSM-2:: Melaminpoly(zinkphosphat) z.B. [(Mel-H)⁺]₂[ZnP₂O₇]²⁻
- FSM-3:: Melaminpoly(magnesiumphosphat) z.B. (Mel-H)₂⁽⁺⁾[Mg₂P₄O₁₃]²⁽⁻⁾
- DOPO-Zn:: Bis(2'-Hydroxybiphenyl-2-phosphinato)-zink

Als Kunststoff wurde in dem nachfolgend angegeben Ausführungsbeispielen Polyamid (PA) 6.6 verwendet. Die Verarbeitung des PA 6.6 (Durethan A30S, Hersteller: Lanxess) mit den genannten Flammschutzmitteln, Glasfasern und Zusätzen erfolgte in einem gleichläufigen 27 mm Leistritz-Doppelschneckenextruder mit der Schneckenlänge 44D, Seitenbeschickung, Vakuumentgasung und 3 mm Zweilochdüse. Polyamidgranulat sowie die vorher hergestellte und im Flügelmischer homogenisierte Additivmischung wurden direkt am Einzug eingefüllt. Die Zugabe der Glasfasern erfolgte über die Seitenbeschickung. Bei einer Massetemperatur von 280°C und einer Drehzahl von 300 rpm wurde die Mischung verarbeitet. Die so erzeugten Kunststoffstränge wurden im Wasserbad auf etwa 40°C gekühlt und anschließend stranggranuliert. Das erzeugte Granulat wurde vor dem Spritzguss bei 85°C für 12 h im Heisslufttrockner getrocknet.

Probekörper nach DIN EN 60695-11-10 wurden mit einer Dicke von 1,6 mm per Spritzgießverfahren hergestellt. Hierzu wurde eine Klöckner Ferromatik Desma FX 75-2F mit einer Verarbeitungstemperatur von 290°C verwendet.

Die hergestellten Probekörper wurden nach DIN EN 60695-11-10 auf ihre Brennbarkeit geprüft. Hierzu wird der stabförmige Probekörper vertikal eingespannt und am unteren Ende zweimal für eine Dauer von 10 s einer 50 W-Flamme ausgesetzt. Die Nachbrennzeiten von fünf gleichen Probekörpern wurden bestimmt und eine Klassifizierung gemäß der Norm vorgenommen.

| Beispiel | Zusammensetzung Flammschutzmittel | Verarbeitungs verhalten | Klassifizierung nach DIN EN 60695-11-10 |
|---|---|---|---|
| Vergleichsbeispiel 1 | 25 Gew. % FSM-1 | - | n.b. |
| Vergleichsbeispiel 2 | 25 Gew. % FSM-2 | - | n.b. |
| Vergleichsbeispiel 3 | 25 Gew. % DOPO-Zn | + | n.b. |
| Vergleichsbeispiel 4 | 25 Gew. % FSM-3 | - | n.b. |
| Erfindungsgemäßes Beispiel 1 | 15 Gew. % FSM-1 | ++ | V-0 |
| | 10 Gew. % DOPO-Zn | | |
| Erfindungsgemäßes Beispiel 2 | 12,5 Gew. % FSM-2 | ++ | V-0 |
| | 12,5 Gew. % DOPO-Zn | | |
| Erfindungsgemäßes Beispiel 3 | 16,7 Gew. % FSM-3 | ++ | V-0 |
| | 8,3 Gew. % DOPO-Zn | | |
| Erfindungsgemäßes Beispiel 4 | 11,25 Gew. % FSM-1 | ++ | V-0 |
| | 11,25 Gew % DOPO-Zn | | |
| Erfindungsgemäßes Beispiel 5 | 11.25 Gew. % FSM-2 | ++ | V-0 |
| | 11.25 Gew. % DOPO-Zn | | |

| | | | |
|---|---|---|---|
| n.b. = keine Klassifizierung erreicht | | | |

Verarbeitungsverhalten: ++ sehr gut homogener glatter Strang, + gut homogener Strang mit wenigen Fehlstellen, - Strang mit Fehlstellen, häufige Strangabrisse

Im Gegensatz zu den Vergleichsbeispielen, die jeweils 25 Gew. % der einzelnen Komponenten (B) oder (C) beinhalten und wobei keine Flammschutzklassifizierung erhalten wird, erreicht man mit den erfindungsgemäßen Zusammensetzungen die Klassifizierung V-0, und damit eine eindeutige synergistische Wirkung. Ferner zeichnen sich die erfindungsgemäßen Beispiele durch eine hohe Korrosionsarmut an Verarbeitungsmaschinen aus, d.h. es sind keine oder nur geringe Mengen an Additiven erforderlich, welche eine Korrosion der Verarbeitungsmaschinen für die erfindungsgemäße Kunststoffzusammensetzung reduzieren oder verhindern.

Weiterhin weisen die erfindungsgemäßen Zusammensetzungen ein vorteilhaftes Verarbeitungsverhalten auf.

Analog zu den erfindungsgemäßen Beispielen 1-3 wurden Versuche mit den erfindungsgemäßen Zusammensetzungen in einem teilaromatischen Polyamid-6/6T (Ultramid T KR 4350, Hersteller: BASF SE) mit 25% Glasfasern und den angegebenen Zusammensetzungen durchgeführt. Die Extrusion erfolgt bei einer Maximaltemperatur von 310 °C, die Herstellung der Prüfkörper bei einer Temperatur von 315 °C. Es wird im Gegensatz zu den Vergleichsbeispielen mit den erfindungsgemäßen Zusammensetzungen ebenfalls eine Klassifizierung nach V-0 erreicht.

| Beispiel | Zusammensetzung Flammschutzmittel | Klassifizierung nach DIN EN 60695-11-10 |
|---|---|---|
| Vergleichsbeispiel 5 | 25 Gew. % FSM-3 | n.b. |
| Vergleichsbeispiel 6 | 25 Gew. % DOPO-Zn | n.b. |
| Erfindungsgemäßes Beispiel 6 | 15 Gew. % FSM-3 | V-0 |
| | 10 Gew. % DOPO-Zn | |
| Erfindungsgemäßes Beispiel 7 | 12,5 Gew. % FSM-3 | V-0 |
| | 12,5 Gew. % DOPO-Zn | |

Gemäß Ausführungsformen der hierin offenbarten Gegenstände wird eine Flammschutzmittelzusammensetzung für Kunststoffe und insbesondere für Polyamide vorgeschlagen, die von der Wirkung, vom Verarbeitungsverhalten und vom Preis/Leistungsverhältnis eine attraktive Alternative zu heute bekannten und verwendeten Zusammensetzungen darstellt. Durch die Korrosionsarmut der hierin offenbarten Flammschutzmittelzusammensetzung können ferner korrosionshemmende Additive eingespart werden oder in der Menge reduziert werden.

Ausführungsformen der hierein offenbarten Gegenstände liefern flammgeschützte Kunststoffzusammensetzungen, beispielsweise auf Basis von Polyamid. Derartige Kunststoffzusammensetzungen finden Anwendung z. B. in Form von Spritzgussteilen, Folien, Beschichtungen, Schäumen, Fasern, Kabeln und Rohren in der Elektro/Elektronikindustrie, im Transport- und Bauwesen, in der Verpackungsindustrie, bei Haushaltsgeräten, Konsumartikeln, Möbeln und Textilanwendungen. Insbesondere können gemäß einer Ausführungsform die flammgeschützten Kunststoffzusammensetzungen in Form von Beschichtungen verwendet werden. Beispielsweise können beliebige geeignete Werkstücke durch Beschichten mit einer Kunststoffzusammensetzung gemäß Ausführungsformen der hierin offenbarten Gegenstände flammgeschützt werden.

Ferner sollte erwähnt werden, dass die Verwendung des Singular, beispielsweise durch Begriffe wie "ein" oder "eines", eine Mehrzahl nicht ausschließt. Beispielsweise schließt die Bezugnahme auf "einen" Kunststoff oder "den" Kunststoff nicht aus, dass an Stelle des einen Kunststoffs zwei oder mehr Kunststoffe verwendet werden können. Beispielsweise schließt die Angabe "Mischen der Flammschutzmittelzusammensetzung mit einem Kunststoff" nicht aus, dass die Flammschutzmittelzusammensetzung mit zwei oder mehr Kunststoffen, beispielsweise allen Kunststoffen, die in der mit dem Verfahren erzeugten Kunststoffzusammensetzung enthalten sind, gemischt wird. Begriffe wie "enthaltend" oder "aufweisend" schließen weitere Merkmale oder Verfahrensschritte nicht aus. Ferner umfasst der hierin verwendete Begriff "enthalten" bzw. "enthält" insbesondere den Begriff "aufweisen" (neben weiteren Bestandteilen) und den Begriff "bestehen aus". Im Rahmen der hierin offenbarten Gegenstände sollen daher beide Bedeutungen ("aufweisen" und "bestehen aus") durch "enthalten" als offenbart gelten.

Ferner bedeutet der Begriff "erfindungsgemäß" oder "gemäß der Erfindung" im Rahmen dieser Anmeldung "gemäß Ausführungsformen der hierin offenbarten Gegenstände". Insbesondere ist die Erfindung nicht auf die als "erfindungsgemäß" bezeichneten Ausführungsformen und Beispiele beschränkt; vielmehr wird durch die Bezugnahme auf die Erfindung lediglich angegeben, dass diese Ausführungsformen und Beispiele unter Umfang der Erfindung fallen.

## Patentansprüche

1. Flammschutzmittelzusammensetzung enthaltend
mindestens eine der folgenden Melamin-Verbindungen:
Melamin(aluminiumphosphat) (Mel-H)₂⁽⁺⁾[AlP₃O₁₀]²⁻;
Melamin(zinkphosphat) [(Mel-H)⁺]₂[ZnP₂O₇]²⁻;
Melamin(magnesiumphosphat)(Mel-H)ₓ⁺[Mg²⁺]₂[PO₃⁻]₍ₓ₊₁₎[PO₄³⁻], wobei x zwischen 1 und 4 liegt, insbesondere (Mel-H)₂⁽⁺⁾[Mg₂P₄O₁₃]²⁽⁻⁾;
oder deren Oligomere oder Polymere; und
ein Derivat von 9,10-dihydro-9-oxa-10-phosphorylphenanthren-10-oxid oder polymere Komplexe dieses Derivates, gemäß mindestens einer der Formeln IIa, IIb, IIc und IId: 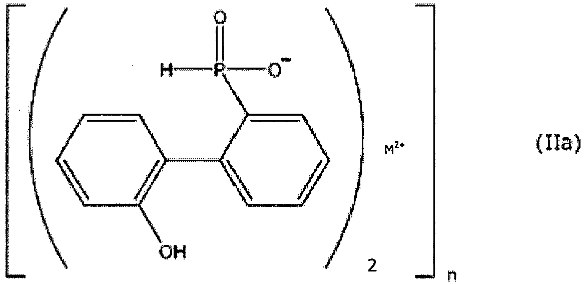 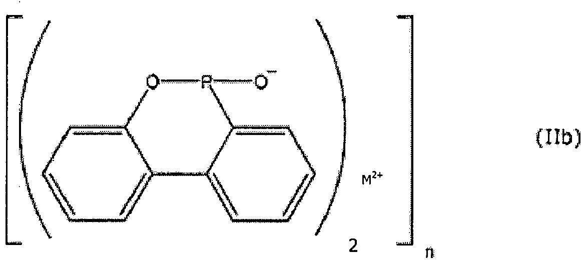 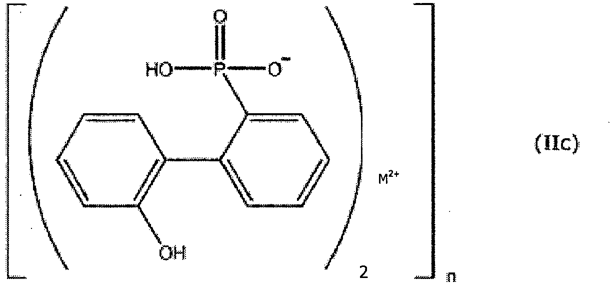 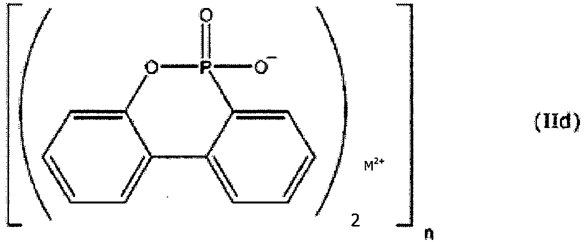 wobei M = Zn und n ≥ 1 ist.

2. Kunststoffzusammensetzung enthaltend mindestens einen Kunststoff und eine Flammschutzmittelzusammensetzung nach Anspruch 1, wobei der Kunststoff ein thermoplastischer Kunststoff, ein elastomerer Kunststoff oder ein duroplastischer Kunststoff ist.

3. Kunststoffzusammensetzung nach Anspruch 2, wobei einer von dem mindestens einen Kunststoff ein Polyamid ist oder ein Polyamid enthält.

4. Kunststoffzusammensetzung nach Anspruch 3, wobei das Polyamid ein aromatisches oder ein teilaromatisches Polyamid ist.

5. Kunststoffzusammensetzung nach einem der Ansprüche 2 bis 4, ferner enthaltend einen Verstärkungsstoff und/oder einen Füllstoff.

6. Kunststoffzusammensetzung nach einem der Ansprüche 2 bis 5, ferner enthal tend einen oder mehrere Säurefänger, einen oder mehrere
Stabilisatoren und/oder ein oder mehrere Dispergiermittel.

7. Verfahren zum Herstellen einer Kunststoffzusammensetzung, welche mindestens einen Kunststoff und eine Flammschutzmittelzusammensetzung nach einem den Ansprüche 1 bis 6 aufweist, umfassend:
Mischen der Melamin-Verbindung gemäß Anspruch 1 mit dem mindestens einen Kunststoff;
Mischen des Derivats von 9,10-dihydro-9-oxa-10-phosphorylphenanthren-10-oxid oder dessen polymerer Komplexe gemäß Anspruch 1 mit dem mindestens einen Kunststoff.

8. Verfahren nach Anspruch 7, ferner enthaltend:
Homogenisieren der Mischung aus dem mindestens einen Kunststoff und der Flammschutzmittelzusammensetzung in der Kunststoffschmelze.

9. Verwendung einer flammgeschützten Kunststoffzusammensetzung gemäß einem der Ansprüche 2 bis 6 in Form von Spritzgussteilen, Folien, Beschichtungen, Schäumen, Fasern, Kabeln und Rohren.

10. Verwendung einer flammgeschützten Kunststoffzusammensetzung gemäß einem der Ansprüche 2 bis 6 in Form einer Beschichtung.

## Claims

1. A flame-retardant composition containing at least one of the following melamine compounds:
melamine (aluminum phosphate) (Mel-H)₂⁽⁺⁾[AlP₃O₁₀]²⁻;
melamine (zinc phosphate) [(Mel-H)⁺]₂[ZnP₂O₇]²⁻;
melamine (magnesium phosphate) (Mel-H)ₓ⁺[Mg²⁺]₂[PO₃⁻]₍ₓ₊₁₎[PO₄³⁻], where x is between 1 and 4, in particular (Mel-H)₂⁽⁺⁾[Mg₂P₄O₁₃]²⁽⁻⁾;
or the oligomers or polymers thereof; and
a derivative of 9,10-dihydro-9-oxa-10-phosphorylphenanthrene-10-oxide or polymeric complexes of this derivative, according to at least one of formulas Ila, IIb, IIc, and IId: 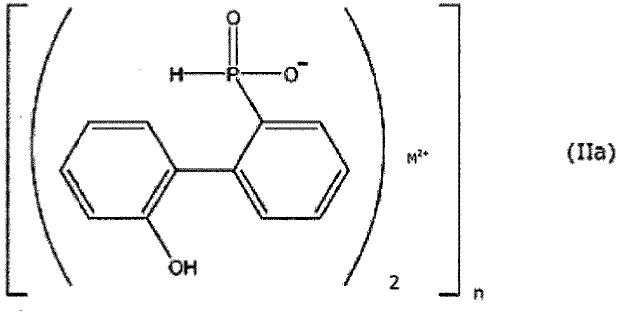 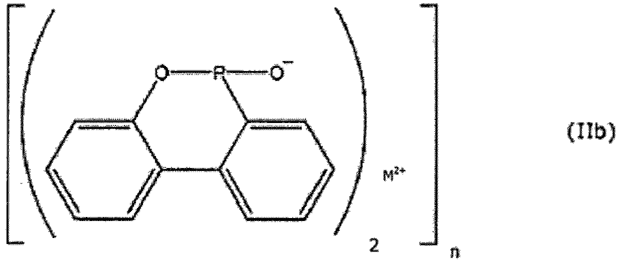 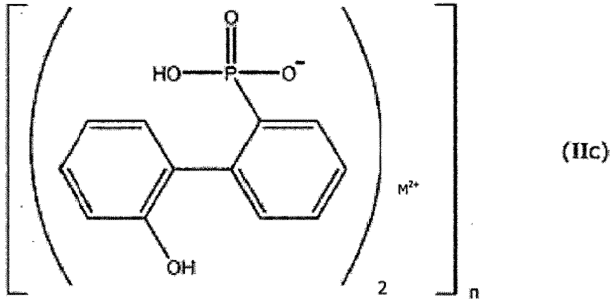 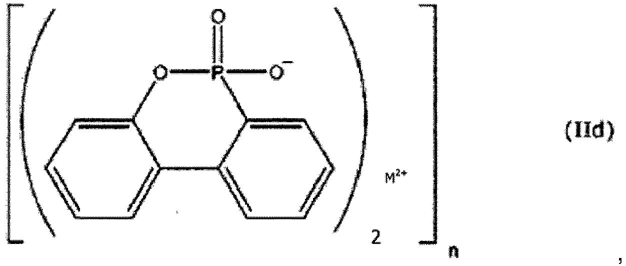 where M = Zn and n ≥ 1.

2. A plastic composition containing at least one plastic and a flame-retardant composition according to Claim 1, wherein the plastic is a thermoplastic plastic, an elastomeric plastic, or a thermosetting plastic.

3. The plastic composition according to Claim 2, wherein one of the at least one plastic is a polyamide or contains a polyamide.

4. The plastic composition according to Claim 3, wherein the polyamide is an aromatic polyamide or a partially aromatic polyamide.

5. The plastic composition according to one of Claims 2 to 4, also containing a reinforcement material and/or a filler.

6. The plastic composition according to one of Claims 2 to 5, also containing one or more acid scavengers, one or more stabilizers, and/or one or more dispersing agents.

7. A method for producing a plastic composition having at least one plastic and a flame-retardant composition according to one of Claims 1 to 6, comprising:
mixing the melamine compound according to Claim 1 with the at least one plastic;
mixing the derivative of 9,10-dihydro-9-oxa-10-phosphorylphenanthrene-10-oxide or polymeric complexes thereof according to Claim 1 with the at least one plastic.

8. The method according to Claim 7, also comprising:
homogenizing the mixture of the at least one plastic and the flame-retardant composition in the plastic melt.

9. Use of a flame-retardant plastic composition according to one of Claims 2 to 6 in the form of injection-molded parts, films, coatings, foams, fibers, cables, and tubes.

10. The use of a flame-retardant plastic composition according to one of Claims 2 to 6 in the form of a coating.

## Revendications

1. Composition ignifuge contenant
l'un au moins des composés de mélamine suivants :
Mélamine (phosphate d'aluminium) (Mel-H)₂⁽⁺⁾[AlP₃O₁₀]²⁻ ;
Mélamine (phosphate de zinc) [(Mel-H)⁺]₂[ZnP₂O₇]²⁻ ;
Mélamine (phosphate de magnésium) (Mel-H)ₓ⁺[Mg₂⁺]₂[PO₃⁻]₍ₓ₊₁₎[PO₄³⁻], x étant compris entre 1 et 4, en particulier (Mel-H)₂⁽⁺⁾[Mg₂P₄O₁₃]²⁽⁻⁾;
ou leurs oligomères ou polymères ; et
un dérivé du 9,10-dihydro-Q-oxa-10-phosphorylphénanthrène-10-oxyde ou des complexes polymères de ce dérivé, selon l'une au moins des formules IIa, IIb, IIc et IId : 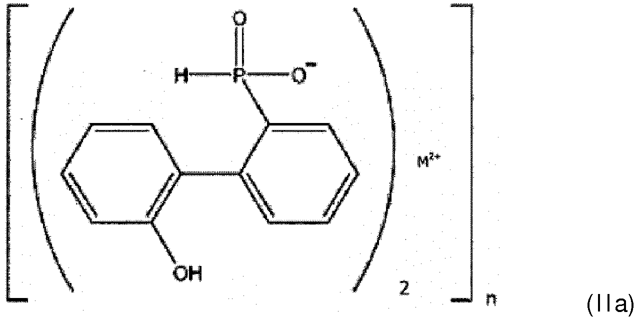 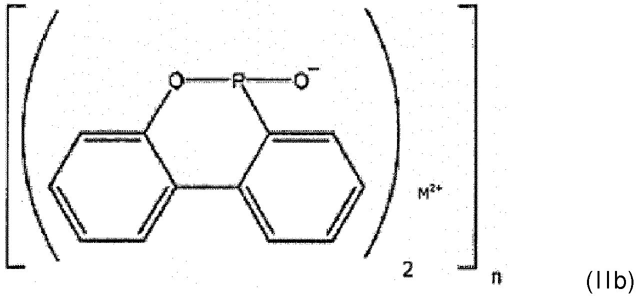 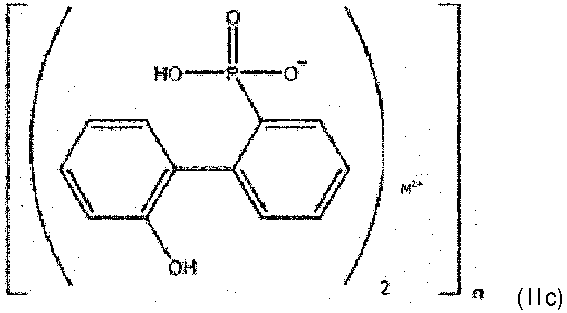 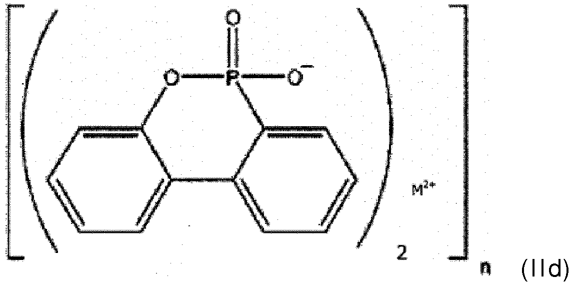 où M = Zn et n ≥ 1.

2. Composition de matière plastique contenant au moins une matière plastique et une composition ignifuge selon la revendication 1, la matière plastique étant une matière thermoplastique, une matière plastique élastomère ou une matière plastique thermodurcissable.

3. Composition plastique selon la revendication 2, l'une au moins des matières plastiques étant un polyamide ou contenant un polyamide.

4. Composition de matière plastique selon la revendication 3, le polyamide étant un polyamide aromatique ou partiellement aromatique.

5. Composition de matière plastique selon l'une des revendications 2 à 4, comprenant en outre un agent de renforcement et/ou une charge.

6. Composition de matière plastique selon l'une des revendications 2 à 5, contenant en outre au moins un agent piégeur d'acide, au moins un agent stabilisant et/ou au moins un agent dispersant.

7. Procédé de production d'une composition de matière plastique comportant au moins une matière plastique et une composition ignifuge selon l'une des revendications 1 à 6, comprenant les étapes suivantes :
mélanger le composé de mélamine selon la revendication 1 avec l'au moins une matière plastique ;
mélanger le dérivé de 9,10-dihydro-9-oxa-10-phosphorylphénanthrène-10-oxyde ou ses complexes polymères selon la revendication 1 avec l'au moins une matière plastique.

8. Procédé selon la revendication 7, contenant en outre l'étape suivante :
Homogénéiser le mélange d'au moins une matière plastique et de la composition ignifuge dans la matière plastique fondue.

9. Utilisation d'une composition de matière plastique ignifuge selon l'une des revendications 2 à 6 sous la forme de pièces moulées par injection, de films, de revêtements, de mousses, de fibres, de câbles et de tubes.

10. Utilisation d'une composition de matière plastique ignifuge selon l'une des revendications 2 à 6 sous la forme d'un revêtement.
